# EUROPÄISCHE PATENTSCHRIFT

(11) **EP 0 750 322 B1**
(45) Veröffentlichungstag und Bekanntmachung des Hinweises auf die Patenterteilung: **15.01.1997**
(21) Anmeldenummer: 95109432.5
(22) Anmeldetag: 19.06.1995
(51) Int. Cl.: H01F 27/14, B01D 19/00

(54) **Minimierung des Gasgehalts in Wärmeträger- und Isolierflüssigkeiten**
Minimization of gas content in liquids used for heat exchange and insulating purposes
Minimisation des gaz dans les liquides caloporteurs et isolants

(43) Veröffentlichungstag der Anmeldung: 27.12.1996
(73) Patentinhaber: Bastian, Jürgen, B-1421 Ophain B.S.I. (BE); Bastian, Anne Isobel, B-1421 Ophain B.S.I. (BE)
(72) Erfinder: Bastian, Jürgen, B-1421 Ophain B.S.I. (BE); Bastian, Anne Isobel, B-1421 Ophain B.S.I. (BE)

(56) Entgegenhaltungen:
- EP-A- 0 407 823
- US-A- 4 321 421
- PATENT ABSTRACTS OF JAPAN vol. 013 no. 439 (E-827) ,3.Oktober 1989 & JP-A-01 166511 (HITACHI LTD) 30.Juni 1989,
- PATENT ABSTRACTS OF JAPAN vol. 011 no. 027 (E-474) ,27.Januar 1987 & JP-A-61 198607 (TOSHIBA CORP) 3.September 1986,
- PATENT ABSTRACTS OF JAPAN vol. 005 no. 153 (E-076) ,26.September 1981 & JP-A-56 087305 (FUJI ELECTRIC CO LTD) 15.Juli 1981,
- PATENT ABSTRACTS OF JAPAN vol. 010 no. 317 (E-449) ,28.Oktober 1986 & JP-A-61 128506 (MITSUBISHI ELECTRIC CORP) 16.Juni 1986,

## Beschreibung

Erhaltung der Eigenschaften von Wärmeträger- und Isolierflüssigkeiten durch Minimierung des und ggf Fremdgasgehalts Spaltgasgehalts, insbesondere von Transformator-Isolierflüssigkeiten.

### Stand der Technik

In flüssigkeitsgekühlten elektrischen Transformatoren nimmt die Flüssigkeit sowohl die Isolierfunktion als auch die Kühlfunktion wahr. Dabei kann die Wahrnehmung der einen Funktion die Wahrnehmung der anderen ungünstig beeinflussen: Das lastabhängig wechselnde Volumen der Flüssigkeit erfordert beim herkömmlichen Transformator entweder ein Ausdehungsgefäß oder ein volumenveränderliches Element oder eine genügend große Flexibilität der Konstruktion. Im ersteren Fall gelangt gewöhnlich entweder getrocknete Luft über den Lufttrockner und die Ölvorlage oder aber, beim sogenannten stickstoffüberlagerten Transformator, Stickstoff mit der Flüssigkeit in Berührung, oder man muß eine Hilfskonstruktion in Form eines, gewöhnlich als Ballon o.ä. bezeichneten, gasgefüllten Puffers einsetzen.

Bei der letzteren Spielart, wie auch beim integral befüllten Hermetiktransformator, versucht man Fremdgase auszuschließen, nimmt dafür aber in Kauf, daß sich die Flüssigkeit - durch Teilentladungen, transiente Überspannungen und andere, lokal molekulare Umwandlungen hervorrufende Betriebszustände - mit Spaltgasen auflädt, die bei Überschreitung der Sättigungsgrenze einen Druckanstieg bewirken und in jedem Fall ein Absinken des Flammpunktes der Flüssigkeit zur Folge haben. Treten sie aus der Flüssigkeit aus, verursachen sie Inhomogenitäten, die zu Durchschlägen führen können.

Im Oberspannungsbereich bis zu 20kV treten diese Probleme nur höchst selten auf. Deshalb hat sich bei Verteiltransformatoren der Hermetiktransformator, insbesondere der integralbefüllte, in jüngerer Zeit stärker durchgesetzt.

Hauptsächlich aus Gründen der plastischen Verformbarkeit der Konstruktion werden hermetische, insbesondere integral befüllte Transformatoren praktisch nur im unteren Leistungsbereich eingesetzt. Durch starke Abkühlung kann es zu Unterdrücken und dadurch bedingtem Ansaugen von Luft und Luftfeuchte kommen.

Elektrische Transformatoren, insbesondere größere, besitzen deshalb gewöhnlich zur Aufnahme des durch Temperaturanstieg bedingten Isolierflüssigkeitsvolumens ein sogenanntes Ausdehnungs- oder Ausgleichsgefäß, dem gewöhnlich eine Ölvorlage mit Lufttrockner vorgeschaltet ist. Letzterer ist nur beschränkt wirksam und erfordert je nach Zyklizität der Lastspiele erheblichen Wartungsaufwand. Als Alternative dazu, aber auch um die Zusammensetzung des gegebenenfalls als Polster dienenden Gases besser kontrollieren zu können, werden auch verschiedenartige Membrananordnungen in Transformatoren verwendet. Dazu zählen balgartige Kompensationsvorrichtungen, zuweilen am Ausdehnungsgefäß angebaut, Membranen im Ausdehnungsgefäß, sackartige Gebilde mit Membranfunktion, die auch in einem mit Luft oder Stickstoff befüllten Behälter untergebracht werden können.

Verschiedene Werkstoffe sind als Membranen eingesetzt worden, wobei chemische Beständigkeit, mechanische Belastbarkeit, sowie mehr oder weniger große Impermeabilität eine wichtige Rolle spielen. Viele Transformatorenbetreiber setzen wegen schlechter Erfahrungen keine Membranen mehr ein.

Auch eine Vorrichtung, die in PATENT ABSTRACTS OF JAPAN Vol. 13 No. 439 (E-827) & JP-A-1 166 511 beschrieben ist, setzt keine Membran ein, im Zusammenhang der damit erstrebten Problemlösung erklärungsbedürftig ist. In dieser Vorrichtung wird nämlich bei Erreichen eines festgelegten Gassättigungswerts, der auf Druck und Temperatur bezogen ist, ein Teil der Flüssigkeit zum Zweck der Entgasung abgezogen und durch entgaste Flüssigkeit ersetzt. Dieser Vorgang wird ständig wiederholt, da das Polstergas wieder in Lösung geht. Da der Entgasungsvorgang weniger Zeit benötigt als das In-Lösung-Gehen des Gases, wird der erstrebte Zweck der Beibehaltung eines Gas-Untersättigungszustands erreicht. Nachteilig bei diesem Verfahren ist, daß nicht zwischen Spalt- und Fremdgasen unterschieden werden kann, da keine Membran eingesetzt wird. Es ist allerdings bekannt, daß die eingesetzten Membranen aus Kautschuk nicht undurchlässig für die gewöhnlich als Polster eingesetzten Gase (Luft oder Stickstoff) sind.

Eine wesentliche Verbesserung wäre durch den Einsatz von Schwefelhexafluorid (SF₆) in einem Ballon zu erzielen, da dieses Gas wesentlich langsamer Membranen durchwandert. Da es sich jedoch durch sehr hohe Löslichkeit in Öl auszeichnet, wäre bei einer beispielsweise durch mechanische Belastung schadhaft gewordenen Membran damit zu rechnen, daß sich das Gas in sehr kurzer Zeit in der Flüssigkeit lösen würde, was sehr negative Folgen mit sich bringen würde, insbesondere das Entstehen eines starken Unterdrucks durch Lösung des Gases und darauf folgende Abkühlung der Flüssigkeit.

### Konstruktive Umsetzungsmöglichkeiten zur Fremdgas- und Spaltgasminimierung.

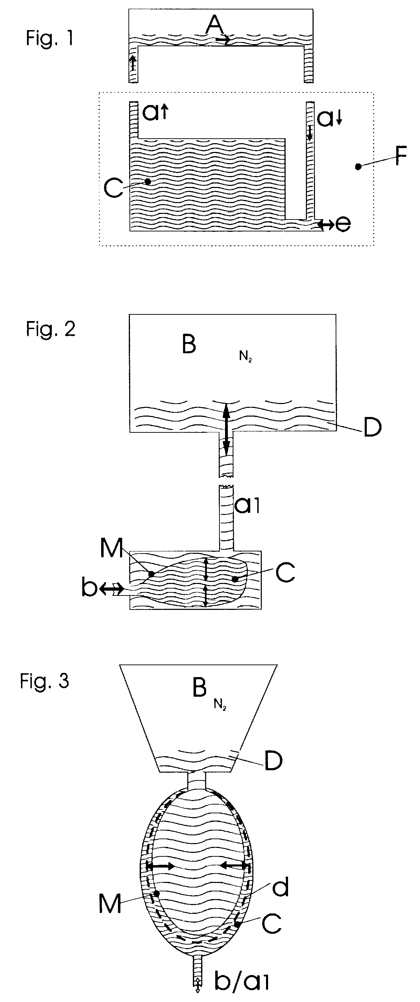

### Konstruktive Nutzung ungenutzter bzw. unbeachteter Gesetzmäßigkeiten der Moleküldichte bei der Permeabilität von Membranen zur Fremdgasminimierung. (Fig. 2 und Fig. 3)

Die Permeationsrate verschiedener Gase - im hier angeführten Fall hauptsächlich N₂, O₂, H₂O - durch die Membran hängt nicht nur von deren Durchlässigkeit für die einzelnen Moleküle und von dem auf die Membran ausgeübten Druck, sondern auch von der Dichte (der Konzentration) der einzelnen Moleküle auf der der Flüssigkeit abgekehrten und den permeierenden Fremdgasen zugekehrten Membranseite ("Gasseite") ab. Die Gasdichte kann dramatisch verringert werden, wenn man dafür sorgt, daß die einzelnen Moleküle nur über ein Medium mit der Membran in Berührung kommen, in dem sie verdünnt vorhanden sind. Als solches Medium bietet sich die Isolierflüssigkeit selbst oder eine andere, mit ihr chemisch ünd isoliertechnisch kompatible Flüssigkeit an. Es kommen praktisch alle gängigen Isolierflüssigkeiten in Frage, selbst solche, die ein relativ hohes Lösevermögen für N₂, O₂, H₂O besitzen, da auch in diesem Fall der Verdünnungsfaktor sehr hoch ist. Mit der in Fig. 2 bzw. Fig. 3 dargestellten Anordnung läßt sich das Angebot an migrationswilligen bzw. permeationsfähigen Molekülen ohne Vakuumbeaufschlagung drastisch reduzieren. Diese Anordnung ermöglicht außerdem, da das Ausdehnungsgefäß bei Beachtung hydrostatischer und hydropneumatischer Gesetzmäßigkeiten an beliebigem Ort neben oder unter dem Transformator bzw. am geeignetesten Ort einer Wärmeträgeranlage angebracht werden kann, die leichte Evakuierung von Spaltgasen bzw. flüchtiger Zersetzungsprodukte durch Anbringung eines Vakuumgefäßes am höchsten Ort der Anlage, gegebenfalls über einer einen hydrostatischen Druck bewirkenden Flüssigkeitssäule.

Der beschriebene Kunstgriff bringt jedoch noch weitere erhebliche Vorteile mit sich:
1) die Membran wird mechanisch geringer belastet,
2) die Membran wird unter Umständen chemisch geringer belastet, als dies bei Sauerstoffgegenwart der Fall wäre.

### Spaltgasminimierung durch konstruktive Nutzung der Möglichkeit der Verwendung von einen hydrostatischen Druck bewirkenden Flüssigkeitssäulen und gleichzeitige Verwendung einer diesen Druck kompensierenden Vakuumbeaufschlagung eines z.B. nach dem Thermosiphonprinzip von der Wärmeträger-/Isolierflüssigkeit durchströmten Entgasungsgefäßes. (Fig. 1)

Bei Transformatoren wird im allgemeinen von der Möglichkeit der Abführung von Spaltgasen durch Anlegung eines Vakuums an das herkömmliche Ausdehnungsgefäß kein Gebrauch gemacht, da die erheblichen Schwankungen des Flüssigkeitsvolumens zyklisch belasteter Transformatoren der konstruktiven Umsetzung dieser Möglichkeit im Wege standen und die schadenrelevante Bedeutung der Spaltgase uneinheitlich beurteilt wird. Da die meisten Spaltgase bei ihrer Entstehung in Lösung gehen, treten sie erst bei Sättigung, gewöhnlich an herausragenden oder unebenen Stellen, bei Zwangsumwälzung an Orten hoher Turbulenz, aus der Flüssigkeit aus. Dieses Phänomen, neben Erschütterungen, ist für viele Fehlauslösungen des Buchholzrelais verantwortlich.

Als weitere Schwierigkeit kommt hinzu, daß bei den meisten Transformator-Isolierflüssigkeiten bei maximaler Betriebstemperatur der Dampfdruck zu hoch ist, um ein starkes Vakuum anzulegen. Durch die Verwendung einer K-Flüssigkeit mit sehr niedrigem Dampfdruck ist nicht nur Entgasung möglich; es ist damit auch die Möglichkeit einer frühzeitigen Fehlerdetektion möglich, da eine Abschwächung des Vakuums (langsamer Druckanstieg) auf die durch einen Fehler oder lokale übermäßige Erwärmung hervorgerufene Entstehung von Spaltgasen aufmerksam macht.

Bei vielen herkömmlichen Wärmeträgeranlagen kommt das Prinzip wegen der notwendigen Druckbeaufschlagung nicht zur Anwendung, ist jedoch bei sogenannten "drucklosen" Systemen anwendbar. Auf diese Weise können flüchtige Zersetzungsprodukte kontinuierlich abgesaugt werden, anstatt daß dies chargenweise geschehen muß. (Fig. 1)

Das Wirkungsprinzip wird am Beispiel Transformatoren erläutert: Spontan im Tank erfolgendes Austreten von Gasen aus der Lösung kann man auf einfache Weise dadurch unterbinden, daß man einerseits dafür sorgt, daß Gase und volatile Verbindungen in einem umfunktionierten Ausdehnungsgefäß austreten können, andererseits im Transformator selbst eine starke Gas-Untersättigung herrscht.

Dies geschieht auf folgende Weise: An Stelle des herkömmlichen Ausdehnungsgefäßes wird in der erforderlichen Höhe über dem Transformator ein Entgasungsgefäß angeordnet. An das Entgasungsgefäß wird ein Vakuum angelegt, das dafür sorgt, daß ein Teil der gelösten Gase aus der Flüssigkeit austritt. Um jedoch eine starke Gasuntersättigung im Transformator zu bewirken, schafft man einen ausreichend großen hydrostatischen Druck, der das Vakuum im Entgasungsgefäß leicht überkompensiert. (Fig. 1)

Die das Entgasungsgefäß z.B. im Thermosiphon-Prinzip durchströmende Flüssigkeitsmenge wird vom durch Abkühlung bewirkten Dichteunterschied zwischen Steig- und Fallrohr und dem Rohrdurchmesser bestimmt. Das Steigrohr wird wärmeisoliert, das Fallrohr mit Kühllamellen o.ä. ausgerüstet. Die Wirksamkeit der Entgasung wird von der Flüssigkeitsoberfläche mitbeeinflußt. Die Entgasung der Flüssigkeit beeinflußt nur die absolute, nicht die relative Löslichkeit der Spaltgase. Da letztere für die DGA (dissolved gas analysis)-Diagnostik wichtig ist, hat die Entgasung also keinen negativen Einfluß.

Um starke Schwankungen des Flüssigkeitspegels im Entgasungsgefäß und dadurch mitbedingte Schwankungen des Vakuums, wie sie bei zyklisch belasteten Transformatoren auftreten müßten, auszuschließen, wird ein neuartiges Ausdehnungsgefäß vorgesehen, das die Wirkungsweise der beschriebenen Entgasung auch bei zyklisch belasteten Transformatoren und ohne Überdimensionierung des Entgasungsgefäßes gewährleistet. Dies geschieht auf folgende Weise:

Die Transformatorenflüssigkeit steht mit einem neben, über oder unter dem Transformator angeordneten zusammendrückbaren, ballonartigen Ausdehnungsbehälter in Verbindung, der von einer Membran gebildet wird, die wiederum in eine Pufferflüssigkeit eingetaucht ist. Die Pufferflüssigkeit wird bei Ausdehnung des ballonartigen Gebildes, die durch die Erwärmung der Transformatorenflüssigkeit bewirkt wird, teilweise in ein Steigrohr verdrängt, wie in Fig. 2 dargestellt, das in ein mit Stickstoff gefülltes Gefäß mündet. Im Prinzip kann auch eine Anordnung angewendet werden, bei der sich die Pufferflüssigkeit im Ballon befindet. Diese Ausführung ist in Fig. 3 dargestellt. Es ist auch eine einfachere Realisierung des Prinzips möglich, bei der die Pufferflüssigkeit, gegebenenfalls über eine Ölvorlage, mit der Luft in Berührung steht. Diese einfachere Ausführung läßt jedoch weniger konstruktiven und installationstechnischen Spielraum, da ein Element der Druckbeaufschlagung, nämlich die Druckbeaufschlagung durch das Inertgas, entfällt.

Die Kombination von Vakuumentgasung im flüssigkeitsdurchflossenen Entgasungsbehälter und kompensatorischer Anordnung von Steig- und Falleitungen sowohl unter dem Entgasungsbehälter als auch der Expansionsverbindung unter dem gegen Fremdgas isolierten unteren Teil des Ausdehnungsgefäßes nach Fig. 3 gewährleistet sowohl Fremdgasarmut als auch fortwährende Spaltgasuntersättigung der Isolierflüssigkeit im Transformalor. Analoges gilt für die Anordnung nach Fig. 2.

Die beschriebene Anordnung von Entgasungs- und Ausdehnungsgefäß in ihren hier beschriebenen Varianten kann auch in drucklosen Wärmeträgeranlagen eingesetzt werden.

### Erklärungen zu den Zeichnungen

- Fig.1:: Befreiung von Spaltgasen
Entgasung der Wärmeträgerflüssigkeit/Isolierflüssigkeit bei gleichzeitiger Kompensation des Unterdrucks durch Erhöhung des hydrostatischen Drucks.
(A) Vakuum von z.B. 0,5bar;
(a) Steig- und Fallrohrhöhe 6m bei Dichte 1g/cm³ ergibt 0,6bar, es ergibt sich dann als Druck im Transformator 1,1bar (oben);
(e) Verbindung zum Ausdehnungsgefäß wie beschrieben, sofern dieses vorgesehen ist;
(e) führt zu (b) in Fig. 2 und Fig. 3;
(C) ist Wärmeträger- und/oder Isolierflüssigkeit, ebenso in Fig. 2 und Fig. 3.
(F) ist druckbeaufschlagter Bereich.
- Fig. 2 und Fig. 3:: Fremdgasfernhaltung
In Fig. 2 und Fig. 3 ist
(B) Inertgasbehälter zur Druckbeaufschlagung;
(M) Membran;
(b) Verbindung zu (e) in Fig. 1;
(a1) in Fig. 2 anders angeordnet als in Fig. 3, bei gleicher Funktion der Schaffung einer hydrostatisch zu bewirkenden Druckerhöhung.
- Fig. 2:: Ausdehnungsgefäß mit Pufferflüssigkeit D ballonaußenseitig
- Fig. 3:: Ausdehnungsgefäß mit Pufferflüssigkeit D balloninnenseitig
(d) ist durchlässige Membranstützkonstruktion und kann auch in der Anordnung nach Fig. 2 eingesetzt werden.
In Fig. 3 drückt die Doppelbezeichnung (b/al) die doppelte Funktion der Verbindungsleitung aus.

## Patentansprüche

1. Vorrichtung zur Minimierung von Spaltgasen in Wärmeträger- und Isolierflüssigkeiten, insbesondere der Isolierflüssigkeit von Transformatoren, und organischen Hochtemperatur-Wärmeträgerflüssigkeiten, gekennzeichnet durch ein Entgasungsgefäß (A), an das im Betrieb ein Vakuum angelegt ist, und einen Bereich (F), der mittels Druckbeaufschlagung untersättigt ist, wobei beide von Flüssigkeit (C) durchflossen werden, die durch ein Steigrohr (a↑) insbesondere wärmeisoliert, und ein Fallrohr (a↓) resp. zu und vom Entgasungsgefäß (A) fließt, und wobei ein durch die Schaffung eines hydrostatischen Drucks kompensiertes Vakuum im nach dem Thermosyphon-Prinzip von Flüssigkeit durchflossenen Entgasungsgefäß (A) geschaffen und aufrechterhalten und die Flüssigkeit kontinuierlich gasarm gehalten wird.

2. Vorrichtung nach Anspruch 1, dadurch gekennzeichnet, daß eine Vakuumpumpe, u.U. über ein zwischengeschaltetes Vakuumgefäß, an das Entgasungsgefäß (A) angeschlossen ist, so daß beim Anstieg des Drucks im Entgasungsgefäß (A) über einen festgelegten Wert eine Druckminderung durch Absaugen bewirkt wird.

3. Vorrichtung nach Anspruch 2, dadurch gekennzeichnet, daß die Vakuumpumpe, u.U. über ein zwischengeschaltetes Vakuumgefäß, an den Entgasungsgefäßen mehrerer Transformatoren angelegt ist, so daß die Entgasungsgefäße auf dem gewünschten Unterdruckniveau gehalten werden.

4. Vorrichtung nach einem der Ansprüche 1 - 3, zur Verwendung in Systemen mit veränderlichem Flüssigkeitsvolumen, insbesondere Transformatoren mit ausgeprägt zyklischen Lastspielen, außerdem dadurch gekennzeichnet, daß zwischen dem durch die Veränderungen der Temperatur der Flüssigkeit bedingten variablen Volumen dieser Flüssigkeit und einer Pufferflüssigkeit (D) eine Membran (M) angeordnet ist, wobei die Pufferflüssigkeit (D) über ein einen hydrostatischen Gegendruck bewirkendes Steigrohr (a1) in ein darüber angeordnetes geschlossenes, mit Inertgas, insbesondere Stickstoff, gefülltes Gefäß (B) mündet, so daß ein Inertgaspolster gebildet wird.

5. Vorrichtung nach einem der Ansprüche 1 - 3, zur Verwendung in Systemen mit veränderlichem Flüssigkeitsvolumen, insbesondere Transformatoren mit ausgeprägt zyklischen Lastspielen, außerdem dadurch gekennzeichnet, daß zwischen dem durch die Veränderungen der Temperatur der Flüssigkeit bedingten variablen Volumen dieser Flüssigkeit und einer Pufferflüssigkeit (D) eine Membran (M) angeordnet ist, wobei die Pufferflüssigkeit (D) und das Inertgaspolster in einer einzigen Baueinheit untergebracht sind und wobei der auf Hydrostatik entfallende Teil des Gegendrucks von der Verbindungsleitung (b/a1) zur mit Flüssigkeit gepufferten Membran (M) und der Flüssigkeitssäule selbst bewirkt wird.

6. Vorrichtung nach einem der Ansprüche 1 - 3, zur Verwendung in Systemen mit veränderlichem Flüssigkeitsvolumen, insbesondere Transformatoren mit ausgeprägt zyklischen Lastspielen, außerdem dadurch gekennzeichnet, daß zwischen dem durch die Veränderung der Temperatur der Flüssigkeit bedingten variablen Volumen dieser Flüssigkeit und einer Pufferflüssigkeit (D) eine Membran (M) angeordnet ist, wobei die Pufferflüssigkeit (D) mit der Umgebungsluft direkt oder über eine Ölvorlage in Verbindung steht.

## Claims

1. Device to minimize decomposition gases in heat transfer and insulation liquids, in particular transformer insulation liquids and high-temperature heat transfer liquids, characterized in that a degassing vessel (A) is subjected to a vacuum during operation of the system, additionally characterized in that the pressure-induced desaturation of part (F) of the system, with a liquid (C) circulating through both that part of the system and through the degassing vessel via an ascending pipe (a↑), preferably thermally insulated, and via a descending pipe (a↓), said arrangement allowing the creation and maintenance of a hydrostatically compensated vacuum in the degassing vessel ensuring permanent desaturation of the thermosiphoning liquid.

2. Device according to claim 1, characterized in that a vacuum pump connected to the degassing vessel (A), via an optional intermediate vacuum chamber, permits reestablishment of the original vacuum as soon as the pressure in the vacuum vessel (A) rises above a set value.

3. Device according to claim 2 characterized in that a vacuum pump serving several transformer degassing vessels, if need be, via a common intermediate vacuum chamber, permits the vacuum to be maintained at the desired level.

4. Device as in Claims 1 to 3 for use with systems of variable liquid volume, especially transformers with a pronounced cyclic load pattern, characterized by the additional feature that a membrane (M) separates the liquid with temperature-dependent variable volume from a buffer liquid (D) which is again linked to closed vessel (B) containing an inert gas, preferably nitrogen, by a rising conduit (a1) which imparts a hydrostatic counterpressure.

5. Device according to claims 1 to 3, for use in systems of variable liquid volume, especially transformers with a pronounced cyclic load pattern, characterized by the additional feature of an arrangement comprising a buffer liquid (D) and a membrane (M) as described in Claim 4, but in a different arrangement, the pipe connection (b/a1) leading to a buffered membrane-enclosed liquid volume, the combined column height of which providing hydrostatic pressure, the buffer liquid being outside rather than inside the membrane-enclosed space.

6. Device according to claims 1 to 3, for use in systems of variable liquid volume, especially transformers with pronounced cyclic load patterns, characterized by the additional feature that the variable volume liquid is separated from the buffer liquid (D) by a membrane (M) and that the buffer liquid (D) is in contact with the atmosphere, with or without interposition of a Florentine flask.

## Revendications

1. Dispositif pour la minimisation des gaz de décomposition dans les liquides isolants et caloporteurs, notamment les liquides de transformateurs et les liquides caloporteurs organiques à haute température, caractérisé d'une part par un vase à dégazage (A) maintenu à vide durant l'opération du système, et d'autre part par une partie (F) du système dans laquelle la mise sous pression maintient le liquide en état désaturé, le liquide (C) circulant dans les deux parties d'une partie vers l'autre, via deux tuyaux, l'un (a↑) en aval, isolé thermiquement de préférence, l'autre (a↓) en amont du vase de dégazage, l'ensemble de ces éléments permettant ainsi la création et le maintien d'un vide en (A) compensé par la pression hydrostatique, le liquide en mouvement de thermosiphon passant en (A), assurant le maintien du liquide dans un état désaturé.

2. Dispositif selon 1, caractérisé par le maintien par une pompe à vide d'un vide dans le vase (A), le cas échéant via un vase intermédiare, ce qui, en actionnant la pompe dès qu'une valeur déterminée est atteinte dans le vase (A), permet le maintien d'un vide.

3. Dispositif selon 2, caractérisé par une disposition où plusieurs transformateurs ayant chacun un vase de dégazage, avec ou sans deuxième vase interposé, sont desservis par une même pompe à vide.

4. Dispositif selon une des revendications 1-3, à usage dans des systèmes ayant un volume de liquide variable, notamment des transformateurs à charge cyclique, caractérisé par l'ajout d'une membrane (M) entre le liquide à volume variable et le liquide tampon (D), ce dernier lié par un tuyau (a1) avec un vase (B) rempli avec un gaz tampon inerte, notamment l'azote, l'arrangement permettant la mise en jeu de la pression hydrostatique et d'un coussin de gaz inerte.

5. Dispositif selon une des revendications 1-3, à usage dans des systèmes ayant un volume de liquide variable, notamment des transformateurs à charge cyclique, caractérisé par l'ajout d'une membrane (M) entre le liquide à volume variable et le liquide tampon (D) donnant dans un vase clos rempli d'un gaz inerte, notamment l'azote, les différents éléments de cet arrangement formant un ensemble de construction, la pression hydrostatique étant assurée par la colonne de liquide dans le vase tampon et par le tuyau (b/a1) liant le transformateur avec l'ensemble constructive décrit.

6. Dispositif selon une des revendications 1-3, à usage dans des systèmes ayant un volume de liquide variable, notamment des transformateurs à charge cyclique, caractérisé par l'ajout d'une membrane (M) entre le liquide à volume variable et le liquide tampon (D) en contact avec l'atmosphère, soit directement ou via un filtre.
